Europäisches Patentamt

European Patent Office

Office européen des brevets

(11) Veröffentlichungsnummer: **0 048 956**
A1

(12) **EUROPÄISCHE PATENTANMELDUNG**

(21) Anmeldenummer: 81107589.4

(22) Anmeldetag: 23.09.81

(51) Int. Cl.³: **B 60 G 21/04**, B 60 G 11/44

(30) Priorität: 26.09.80 DE 8025819 U

(43) Veröffentlichungstag der Anmeldung: 07.04.82
Patentblatt 82/14

(84) Benannte Vertragsstaaten: DE FR GB IT NL

(71) Anmelder: **Alois Kober KG, Maschinenfabrik, Ichenhauserstrasse 14, D-8871 Kötz 2 (DE)**

(72) Erfinder: **Kober, Kurt, Am Sandberg 2, D-8871 Kötz 1 (DE)**
Erfinder: **Ciani, Vittorio, Via Barducci 2, I-50041 Firenze (IT)**

(74) Vertreter: **Ernicke, Hans-Dieter, Dipl.-Ing., Schwibbogenplatz 2b, D-8900 Augsburg (DE)**

(54) **Achse, vornehmlich Längslenkerachse, für Kraftfahrzeuge, oder Kraftfahrzeug-Anhänger.**

(57) Die Erfindung bezieht sich auf eine Achse, vornehmlich Längslenkerachse, für Kfz und Kfz-Anhänger. Um eine gute Federung der Achse, mit einer wirksamen Dämpfung und verbesserten Kurvenfahreigenschaften zu verbinden, werden die beiden Radschwinghebel (4) drehschlüssig über mindestens einen Torsionsfederstab (11), der nicht an ortsfesten Teilen abgestützt ist, gekoppelt. Jeder Radschwinghebel (4) stützt sich über einen Lagerbock (8) an einer Längsblattfederanordnung (9) ab, wobei der Lagerbock (8) ausweichfähig an der Blattfederanordnung (9) und die Blattfederanordnung (9) längsbeweglich am Fahrzeugrahmen (1) geführt ist.

## Achse, vornehmlich Längslenkerachse, für Kraftfahrzeuge, oder Kraftfahrzeug-Anhänger

Die Erfindung bezieht sich auf eine Achse, vornehmlich Längslenkerachse, für Kraftfahrzeuge, Kraftfahrzeuganhänger, wie z.B. Wohnwagen, landwirtschaftliche Anhänger oder sonstige Anhänger, bei der jeder am Fahrgestell oder am Rahmen des Fahrzeuges gelagerte Radschwinghebel mit seinem die Radachse tragenden Ende an einer Längsblattfederanordnung abgestützt ist.

In der technischen Entwicklung der Achsen für Kraftfahrzeug-Anhänger ging man zunächst von der Starrachse aus, die ggf. über Blattfedern gegenüber dem Anhängerrahmen abgestützt war. Obwohl die Blattfedern Kräfte in allen Richtungen aufzunehmen in der Lage sind, führte die Entwicklung zu sogenannten Längslenkerachsen, bei denen Radschwinghebel um eine horizontale, quer zur Fahrtrichtung sich erstreckende Achse gegen die Wirkung von Rückstellfedern schwingen. Bei Anhängern mit gehobenen Ansprüchen, wie z.B. bei Wohnwagen, folgte dieser Entwicklung die Anordnung der Radachsen nach Art von Schräglenkern (DE-GM 7 835 540 und 7 835 541).

Soweit die Rückstellfedern als Gummifedern ausgebildet sind, weisen diese zwar eine hervorragende Federkennlinie und gute Dämpfungseigenschaft auf. Die Wirkung von Gummifederelementen ist aber in nicht unerheblichem Maße temperaturabhängig. Soweit metallische Drehstabfedern eingesetzt werden, ergab sich das Problem der Schwingungsdämpfung.

0048956

Es ist ferner bekannt, als Längslenker ausgebildete Radschwinghebel an Blattfedern abzustützen, wobei die Radschwinghebel lediglich drehbar im Rahmen gelagert sind (Le Caravanier, Nr. 83, 15.06.1979). Solche Anordnungen bedingen eine gelenkige Aufhängung der Längsblattfedern und weisen eine unzureichende Fahreigenschaft bei ungleichmäßiger Belastung des Fahrzeuges und bei Kurvenfahrt auf.

Vom letztgenannten Stand der Technik geht die Erfindung aus und setzt sich zur Aufgabe, eine Achse für Kraftfahrzeuge oder für Kraftfahrzeug-Anhänger zu entwickeln, die unter Abkehr von der eingangs erwähnten Entwicklungsrichtung den Ansprüchen an Temperaturunabhängigkeit und ausreichender Dämpfungswirkung genügt und dennoch eine für gehobene Ansprüche ausreichende Fahreigenschaft des Anhängers gewährleistet.

Überraschenderweise konnte eine gelungene Lösung dieser Aufgabe dadurch gefunden werden, daß beide Radschwinghebel untereinander über mindestens einen Torsionsfederstab drehschlüssig verbunden sind, der nicht an ortsfesten Teilen abgestützt ist.

Mit dem Gegenstand der Erfindung werden somit zwei unterschiedliche Federsysteme eingesetzt. Die Radschwinghebel sind um ihre Schwingachse mit einem sonst nicht abgestützten Torsionsfederelement verbunden. Zusätzlich stützt sich aber der Radschwinghebel über den Lagerbock an einer Längsblattfeder ab, wobei es sich empfiehlt, den Lagerbock an der Blattfederanordnung ausweichfähig abzustützen.

Der besondere Effekt der Erfindung besteht in der Überlagerung der unterschiedlichen Federsysteme, wobei die Vorteile der Längsblattfeder mit den Vorteilen des Torsionsfederstabes kombiniert, aber deren Nachteile ausgeschaltet werden. Bei mehrlagigen Blattfedern wird deren

Dämpfungseigenschaft ausgenützt. Sind nur wenige Lagen vorgesehen, kann ein zusätzlicher Stoßdämpfer eingesetzt werden. Die Verbindung der Radschwinghebel mittels Torsionsfederstäben, die sonst nirgends abgestützt sind, führt dazu, die bei Kurvenfahrt oder einseitiger Lastverlagerung sich einstellende Verschwenkung des einen Radschwinghebels auf den anderen, entlasteten, Radschwinghebel zur Auswirkung kommen zu lassen mit der Folge, daß das entlastete Rad eine stärkere Bodenaufdrückkraft erhält und damit die Fahreigenschaften selbst bei extremen Verhältnissen wesentlich verbessert werden.

Während man bei den bekannten Blattfederanordnungen, die meistens für Starrachsen Verwendung fanden (vgl. Reimpell, Fahrwerktechnik, 2. Aufl., S. 80) den Nachteil der Eigenreibung und -dämpfung beklagte, wird beim Gegenstand der Erfindung "dieser Nachteil" bewußt eingesetzt, um die für Fahrzeuganhänger erforderliche Dämpfung der Radschwinghebelbewegung herbeizuführen. Dadurch war es möglich, die Radschwinghebel untereinander mit Torsionsfederstäbe zu verbinden, die bekanntlich keine oder nur eine geringfügige Dämpfungswirkung besitzen.

Ein anderer Vorteil ergibt sich schließlich dadurch, daß die Radschwinghebel trotz extremer Belastung beim Durchfahren von Kurven mit hoher Geschwindigkeit oder beim Überqueren von Schlaglöchern, schlechten Straßen oder dergleichen, keiner mechanischen Deformation ausgesetzt sind, weil die auf die Radschwinghebel von den Rädern her einwirkenden Kräfte über die Blattfederanordnung aufgefangen werden, die nach allen Dimensionen hin belastbar ist.

Weitere Merkmale der Erfindung sind in den Unteransprüchen definiert. Einzelheiten der Erfindung ergeben sich aus der Zeichnung. In ihr ist die Erfindung schematisch und beispielsweise dargestellt. Es zeigen:

0048956

Fig. 1: eine Seitenansicht einer Achse und

Fig. 2: einen Schnitt durch die Achse entlang der Linie II-II gemäß Fig. 1.

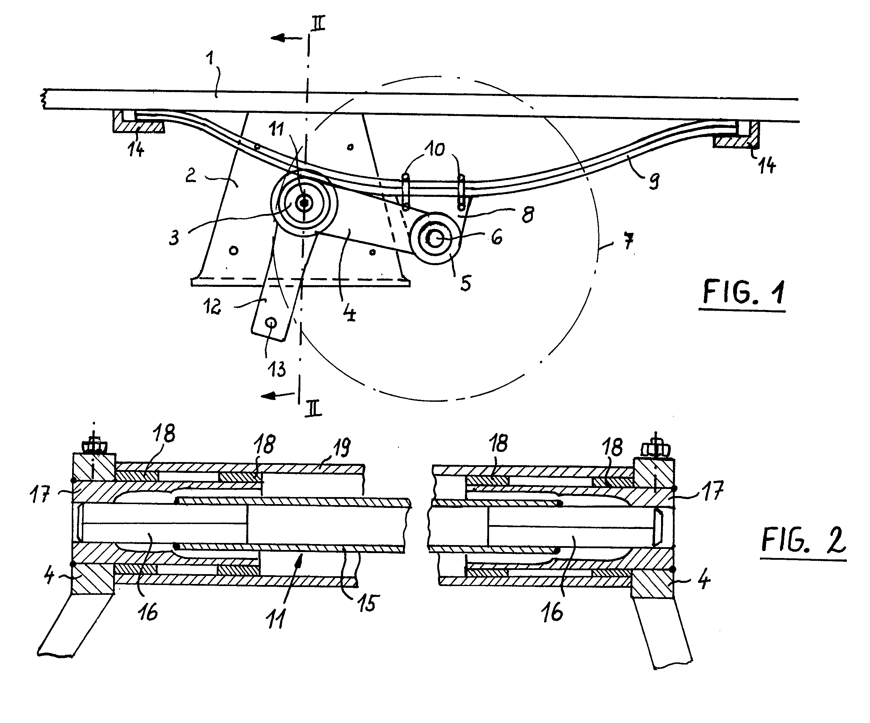

Mit 1 ist ganz schematisch ein Rahmen bezeichnet, der den Längsholmen eines Fahrgestelles oder der Anhängeraufbauten darstellen kann. An diesem Rahmen 1 ist unmittelbar oder mittelbar ein Lagerschild 2 angeordnet, in dem sich eine Schwingachse 3 für Radschwinghebel 4 befindet. Diese Schwingachse kann in herkömmlicher Weise durch eine Hohltraverse, welche die Lagerschilde 2 miteinander verbindet, gebildet sein, in der die Radschwinghebel 4 drehbar gelagert sind. Wie die Fig. 2 zeigt, sind die Radschwinghebel 4 untereinander durch mindestens einen Torsionsfederstab 11 verbunden, der im übrigen nicht abgestützt ist.

Die Radschwinghebel 4 tragen an ihrem freien Ende die Radachse 6. Beim Ausführungsbeispiel ist vorgesehen, daß eine Nabe 5 des Radschwinghebels 4 einen Zapfen trägt, auf dem die Nabe des Rades 7 gelagert ist.

Mit dem freien Ende, beispielweise der Nabe 5 des Radschwinghebels 4, ist außerdem ein Lagerbock 8 verbunden, der sich an einer Längsblattfederanordnung 9 hängend abstützt. Die Enden der Längsblattfederanordnung 9 sind mit dem Rahmen 1 des Fahrgestelles bzw. der Anhängeraufbauten über Führungen 14 verbunden, so daß dort ein Ausweichen in Längsrichtung möglich ist. Da der Radschwinghebel 4 nur einen Freiheitsgrad um seine Schwingachse 3 hat, ist es zweckmäßig, den mit dem Radschwinghebel 4 mittelbar oder unmittelbar verbundenen Lagerbock 8 ausweichfähig an der Längsblattfederanordnung 9 abzustützen. Zu diesem Zweck wird beim Ausführungsbeispiel der Erfindung vorgesehen, die Verbindung über Ösen 10 durchzuführen, die um die Längsblattfederanordnung 9 geführt sind, daher leicht montiert werden können, und

0048956

die eine Ausweichbewegung des Lagerbockes 8 entlang der Längsachse der Blattfederanordnung 9 zulassen.

Es empfiehlt sich, den Lagerzapfen 6 für das Rad 7 durch die Nabe 5 zu führen und als Lagerung für den Lagerbock 8 zu verwenden. Am Radschwinghebel 4 kann außerdem ein Hebelansatz 12 für den Anschluß 13 eines Stoßdämpfers vorgesehen werden, sofern dieses als erforderlich gehalten wird. Je weniger Lagen der Längsblattfeder 9 Verwendung finden, desto nötiger ist die Anordnung eines Stoßdämpfers.

Wie besonders Fig. 2 zeigt, sind die beiden Radschwinghebel 4 über einen Torsionsfederstab 11 miteinander drehschlüssig verbunden. Dieser Torsionsfederstab 11 ist im übrigen nicht abgestützt. Wenn also ein Radschwinghebel 4 infolge starker einseitiger Belastung, insbesondere bei Kurvenfahrt, stark einschwingt, wird über den Torsionsfederstab mit einer gewissen Verminderung zufolge der Torsionsdeformation der andere Radschwinghebel 4 ebenfalls verschwenkt, was dort, wo eigentlich Radentlastung entstehen müßte, eine stärkere Bodenhaftung des Rades erzwungen wird. Infolgedessen ist die Fahreigenschaft wesentlich verbessert.

Der Torsionsfederstab 11 besteht beim Ausführungsbeispiel der Fig. 2 aus einem torsionselastischen Rohr 15, an dessen Enden je ein im Querschnitt prismatischen Ansatz 16 angeschweißt ist. Diese Ansätze 16 sind dreh-schlüssig mit den Radschwinghebeln 4 verbunden.

Mit den Naben der Radschwinghebel 4 sind außenseitig Hülsen 17 verschweißt, die über Lagerbüchsen 18 in einer starren Hohltraverse 19 gelagert sind. Der Innendurchmesser der Hülsen 17 ist stufenweise abgesetzt, um den Außenabmaßen des Torsionsfederstabes 11 Raum zu verschaffen.

- 6 -

0048956

Sind die Radschwinghebel 4 als Schräglenker ausgebildet, dann wird der Torsionsfederstab 11 parallel zur Radachse, aber außerhalb der Achstraversen mit Ansätzen der Radschwinghebel 4 verbunden.

Dipl.-Ing. H.-D. Ernicke
Patentanwalt

0048956

## S t ü c k l i s t e

1 Rahmen (Fahrgestell bzw. Anhänger)

2 Lagerschild

3 Schwingachse

4 Radschwinghebel

5 Nabe

6 Radachse

7 Rad

8 Lagerbock

9 Längsblattfederanordnung

10 Öse

11 Torsionsfederstab

12 Hebelansatz

13 Anschluß für Stoßdämpfer

14 Führung

15 Torsionsrohr

16 Ansatz

17 Hülsen

18 Lagerbüchse

19 Hohltraverse

0048956

<u>Patentansprüche</u>

1.) Achse, vornehmlich Längslenkerachse, für Kraftfahrzeuge, Kraftfahrzeug-Anhänger, wie z.B. Wohnwagen, landwirtschaftliche Anhänger oder sonstige Anhänger, bei der jeder am Fahrgestell oder am Rahmen des Fahrzeuges gelagerte Radschwinghebel mit seinem die Radachse tragenden Ende an einer Längsblattfederanordnung abgestützt ist, dadurch g e k e n n z e i c h n e t , daß beide Radschwinghebel (4) untereinander über mindestens einen Torsionsfederstab (11) drehschlüssig verbunden sind, der nicht an ortsfesten Teilen abgestützt ist.

2.) Achse nach Anspruch 1, dadurch g e k e n n z e i c h n e t , daß der Torsionsfederstab (11) aus einem Torsionsrohr (15) besteht, an dessen Enden Ansätze (16) mit prismatischem Querschnitt, insbesondere Sechskant, angeschweißt sind, an denen passende Elemente der drehbar gelagerten Radschwinghebel (4) drehschlüssig angreifen.

3.) Achse nach Anspruch 1 oder 2, dadurch g e k e n n z e i c h n e t , daß der Torsionsfederstab (11) konzentrisch zur Schwingachse der als Längslenker ausgebildeten Radschwinghebel (4) angeordnet ist.

4.) Achse nach Anspruch 1 oder 2, dadurch g e k e n n z e i c h n e t , daß der Torsionsfederstab (11) bei Ausbildung der Radschwinghebel (4) als Schräglenker an Ansätzen der Radschwinghebel angeschlossen ist.

5.) Achse nach Anspruch 1 oder einem der folgenden, dadurch g e k e n n z e i c h n e t , daß der einzelne Radschwinghebel (4) an seinem freien Ende einen drehbar auf einer Achse (6) angeordneten Lagerbock (8) trägt, der mit der Längsblattfederanordnung (9) ausweichfähig verbunden ist.

6.) Achse nach Anspruch 5, dadurch g e k e n n z e i c h n e t , daß der Lagerbock (8) über Ösen (10) an der Längsblattfederanordnung (9) aufgehängt ist.

7.) Achse nach Anspruch 1 oder einem der folgenden, dadurch g e k e n n z e i c h n e t , daß die Längsblattfederanordnung (9) am Fahrgestell bzw. Rahmen (1) lediglich geführt (14) angeordnet ist.

8.) Achse nach Anspruch 1 oder einem der folgenden, dadurch g e k e n n z e i c h n e t , daß die Radschwinghebel (4) gegenüber dem Fahrgestell bzw. Rahmen (1) durch Stoßdämpfer (13) abgestützt sind.

Dipl.-Ing. H.-D. Ernicke
Patentanwalt
ppa. Ernicke

FIG. 1

FIG. 2

1/1

0048956

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| D | DE - U - 7 835 541 (KOBER) | 1,4 |
| D | DE - U - 7 835 540 (KOBER) | 1-3 |
| X | CH - A - 196 112 (SCHMUTZ-BREMSEN) <br> * Seite 1, rechte Spalte, letzter Absatz - Seite 2, linke Spalte, Absatz 3; Figuren 1,2 * <br> -- | 1-3 |
| X | FR - A - 915 821 (GREGOIRE) <br> * Seite 2, Zeile 23 - Seite 3, Zeile 24; Figuren 1-5 * <br> -- | 1-3 |
| | DE - A - 2 161 058 (BERGISCHE ACH-SENFABRIK) <br> * Seite 4, Absatz 4 - Seite 5, Absatz 3; Figuren 1-3 * <br> -- | 1, 2, |
| | DE - A - 1 480 102 (SVENDSEN) <br> * Insgesamt * <br> -- | 1 |
| | DE - A - 2 439 824 (DAIMLER-BENZ) <br> * Seite 6, Absatz 2 - Seite 7, Absatz 1; Figur 2 * <br> -- | 1,2,4 |
| | FR - A - 1 359 649 (FERRIER) <br> * Insgesamt * <br> -- | 1-3,8 |
| X | BE - A - 553 240 (RENAULT) <br> * Insgesamt * <br> -- ./. | 1-3,5-8 |

**KLASSIFIKATION DER ANMELDUNG** (Int. Cl.³)

B 60 G 21/04
11/44

**RECHERCHIERTE SACHGEBIETE** (Int. Cl.³)

B 60 G
F 16 F

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-12-1981 | ESPEEL |

**Europäisches Patentamt**

**EUROPÄISCHER RECHERCHENBERICHT**

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | US - A - 2 241 827 (RABE) <br> * Insgesamt * <br><br> -- | 1-3,8 | |
| | FR - A - 1 086 001 (TITAN) <br> * Insgesamt * <br><br> -- | 1-3,7 | |
| | DE - C - 565 647 (LUDWIG) <br> * Insgesamt * <br><br> -- | 5,6 | |
| A | DE - B - 1 072 893 (JORN) | 1 | RECHERCHIERTE SACHGEBIETE (Int. Cl.³) |
| A | GB - A - 1 136 576 (S.A.G.A.) | 1 | |
| A | GB - A - 694 386 (GIRLING) | 1 | |
| A | US - A - 4 125 276 (LEVASSEUR) | 1 | |
| A | US - A - 3 711 079 (McJUNKIN) | 1 | |
| A | FR - A - 1 362 660 (CITROEN) | 1 | |
| | ---- | | |

EPA Form 1503.2   06.78